# FASCICULE DE BREVET EUROPEEN

(11) **EP 3 425 710 B1**
(45) Date de publication et mention de la délivrance du brevet: **16.06.2021**
(21) Numéro de dépôt: 18182220.6
(22) Date de dépôt: 06.07.2018
(51) Int. Cl.: H01M 4/90, H01M 4/96

(54) **PROCEDE DE PREPARATION DE NANOPARTICULES EXEMPTES DE METAUX NOBLES ET LEUR UTILISATION DANS DE LA REDUCTION DE L'OXYGENE**
HERSTELLUNGSVERFAHREN VON NANOPARTIKELN OHNE EDELMETALLE, UND IHRE VERWENDUNG ZUR SAUERSTOFFREDUZIERUNG
PROCESS FOR THE PREPARATION OF NANOPARTICLES FREE OF NOBLE METALS AND THEIR USE IN OXYGEN REDUCTION

(30) Priorité: 07.07.2017 FR 1756443
(43) Date de publication de la demande: 09.01.2019
(73) Titulaire: Commissariat à l'Energie Atomique et aux Energies Alternatives, 75015 Paris (FR)
(72) Inventeur: PEREZ, Henri, 91080 COURCOURONNES (FR); LECONTE, Yann, 78470 SAINT REMY LES CHEVREUSE (FR)
(74) Mandataire: Plasseraud IP

(56) Documents cités:
- WO-A1-2016/009328
- US-A1- 2007 082 255
- LECONTE ET AL: "Continuous production of water dispersible carbon-iron nanocomposites by laser pyrolysis: Application as MRI contrasts", JOURNAL OF COLLOID AND INTERFACE SCIENCE, ACADEMIC PRESS,INC, US, vol. 313, no. 2, 31 juillet 2007 (2007-07-31), pages 511-518, XP022182068, ISSN: 0021-9797, DOI: 10.1016/J.JCIS.2007.05.010
- VEINTEMILLAS-VERDAGUER ET AL: "Continuous production of inorganic magnetic nanocomposites for biomedical applications by laser pyrolysis", JOURNAL OF MAGNETISM AND MAGNETIC MATERIALS, ELSEVIER, AMSTERDAM, NL, vol. 311, no. 1, 15 mars 2007 (2007-03-15) , pages 120-124, XP022036644, ISSN: 0304-8853, DOI: 10.1016/J.JMMM.2006.10.1200
- JÄGER C ET AL: "Iron-carbon nanoparticles prepared by CO2 laser pyrolysis of toluene and iron pentacarbonyl", APPLIED PHYSICS A; MATERIALS SCIENCE & PROCESSING, SPRINGER, BERLIN, DE, vol. 85, no. 1, 10 août 2006 (2006-08-10), pages 53-62, XP019424449, ISSN: 1432-0630, DOI: 10.1007/S00339-006-3665-2

## Description

La présente invention concerne la synthèse d'électrocatalyseurs de la réduction de l'oxygène exempts de métaux nobles par la méthode de pyrolyse laser. L'invention s'applique à tous les domaines exploitant les propriétés d'électrocatalyse en particulier ceux touchant aux systèmes qui sont le siège de phénomènes électrochimiques, comme par exemple les piles à combustibles.

Le matériau se présente sous la forme d'une poudre de taille nanométrique qui peut être utilisée telle qu'obtenue ou après divers traitements, pour réaliser une électrode sur laquelle la propriété de réduction de l'oxygène peut être mise en évidence.

La synthèse d'électrocatalyseurs de la réduction de l'oxygène exempts de métaux nobles fait l'objet d'une activité de recherche très intense à travers le monde. L'enjeu lié à cette thématique est en effet très important puisqu'elle conditionne le développement significatif à long terme de la filière hydrogène et des dispositifs électrochimiques de production d'énergie électrique de type piles à combustible. Ces derniers incorporent des électrocatalyseurs permettant d'augmenter le rendement de recombinaison de l'hydrogène et de l'oxygène produisant électricité, eau, et chaleur. Ces réactions se produisent en milieu basique ou en milieu acide selon la nature de l'électrolyte utilisé dans la pile. L'utilisation d'électrocatalyseurs est nécessaire à l'anode où se produit l'oxydation de l'hydrogène et à la cathode où se produit la réduction de l'oxygène. C'est au niveau de cette dernière réaction, particulièrement lente que les pertes de conversion en énergie électrique sont les plus élevées, la littérature s'y intéresse donc plus particulièrement. Les électrocatalyseurs de référence utilisés dans les dispositifs les plus performants sont essentiellement à base de métaux nobles et en particulier de platine. De fait, la rareté de cet élément et son coût limitent à long terme le développement à grande échelle de la technologie des piles à combustible.

Une revue récente [1] sur la synthèse et les performances des électrocatalyseurs dédiés à la réduction de l'oxygène consacre une part importante aux électrocatalyseurs sans métaux nobles à base de carbone, d'azote et d'un métal (le fer le plus souvent). Dans cette catégorie, les électrocatalyseurs sont répertoriés et classés en fonctions de leurs performances sur la base de tests en pile, alimenté par de l'air ou de l'oxygène à la cathode. Cette revue est doublée d'une description détaillée des conditions de synthèse permettant d'obtenir ces catalyseurs et de leurs caractéristiques en termes de surface spécifique. De cette analyse il ressort que le premier facteur déterminant est la formation de structures électrocatalytiques, possédant bien sûr des sites actifs, mais surtout une très grande surface spécifique. Les cinq meilleurs électrocatalyseurs possèdent ainsi des surfaces spécifiques comprises entre 758 m2/g et 1096 m2/g. Tous ces systèmes électrocatalytiques impliquent l'utilisation avec les précurseurs, d'éléments particuliers (polymères, matrices sacrificielles à base de silice, structures de type MOF). Ces précurseurs particuliers peuvent ou pas, selon leur nature, non seulement constituer des éléments permettant d'obtenir des matériaux de grande surface spécifique mais également des précurseurs des éléments carbone azote qui permettent avec le précurseur métallique, la formation des sites actifs. Enfin, il est important de préciser également que les matériaux de type C/N/Métal les plus actifs répertoriés comportent dans leur procédé d'élaboration des étapes particulières (étape de mélange puis de remise à sec, étape de broyage) qui semblent déterminantes vis-à-vis des performances obtenues. A ces étapes se rajoutent des traitements thermiques, intermédiaires ou finaux, conduisant à la formation de l'électrocatalyseur proprement dit.

Enfin si la synthèse d'électrocatalyseurs sans métaux nobles comportant un métal a été largement évoquée ci-avant, il existe aussi de nombreux exemples d'électrocatalyseurs à base de carbone et d'azote qui ne comportent aucun métal [2]. Les performances de ces électrocatalyseurs sont en général moins élevées que ceux dont la préparation implique un métal tel que le fer [1].

Il existe donc toujours un besoin de nouveaux électrocatalyseurs de la réduction de l'oxygène permettant présentant de bonnes performances tout en étant économiquement viable dans des utilisations industrielles telles que les piles à combustibles.

Un but de l'invention est donc de proposer un procédé de préparation d'électrocatalyseurs de la réduction de l'oxygène permettant d'atteindre ces objectifs.

Il est du mérite des inventeurs d'avoir trouvé que ce but pouvait être atteint avec un procédé particulier de synthèse faisant appel à la pyrolyse laser.

La pyrolyse laser est une méthode de synthèse de nanomatériaux [3]. L'insertion d'azote dans des structures carbonées par la méthode de pyrolyse laser est décrite dans la littérature par exemple à partir de précurseurs gazeux monométhyl amine, d'éthylène et de protoxyde d'azote [4]. La méthode de pyrolyse laser est également décrite dans la littérature pour la formation de nanoparticules à base de fer sous la forme de carbure, d'oxyde ou de nitrure ou carbonitrures incorporant des quantités plus ou moins importantes de carbone. Les applications ou propriétés mentionnées pour ces nanoparticules concernent les domaines de la catalyse de la synthèse de Fischer-Tropsch, mais également de la production de particules ou de fibres de carbone catalysée par le fer. On trouve également des applications liées à la détection de gaz, à l'imagerie biomédicale et aux propriétés magnétiques.

A la connaissance des inventeurs, il n'existe pas à ce jour dans la littérature scientifique d'exemples rapportant l'utilisation de la méthode de pyrolyse laser pour la synthèse de nanomatériaux exempts de métaux nobles, constitués très majoritairement de carbone et de structures de type C/Hétéroatomes N, S ou P / Métal ou de structures de type C/N sans métal et possédant des propriétés de réduction de l'oxygène. Par exemple, la demande de brevet US 2011/0183234 qui concerne la synthèse d'électrocatalyseurs de la réduction de l'oxygène en particulier en milieu acide par la méthode de pyrolyse laser revendique la préparation de phase minérales de type carbonitrures ou oxycarbonitrures de métaux de transition des colonnes IV et V du système périodique des éléments, par exemple TiOₓC_{y}N_{z}. Dans ce cas, la phase minérale comporte une teneur en carbone très minoritaire et est directement porteuse des sites actifs, à l'instar de ce qui est rapporté dans la littérature pour ce type de matériaux obtenus selon d'autres procédés [5].

Un objet de l'invention est donc un procédé de préparation de nanoparticules exemptes de métaux nobles et ayant une teneur en carbone en composition de surface d'au moins 80% atomique, ledit procédé comprenant les étapes suivantes :
a) fourniture d'une composition liquide telle que définie à la revendication 1 ;
b) transformation de la composition liquide de l'étape a) en nanoparticules ayant une teneur en carbone d'au moins 80% atomique en composition de surface et exemptes de métaux nobles par pyrolyse laser ;
c) éventuellement traitement thermique des nanoparticules obtenus à l'étape b) sous atmosphère NH₃, argon ou oxygène, à une température allant de 600 °C à 1100 °C.

Ce procédé permet de préparer des nanoparticules à teneur très majoritaire en carbone en composition de surface, de préférence d'au moins 80% atomique, plus préférentiellement d'au moins 90% atomique. La teneur en carbone en composition de surface des nanoparticules selon l'invention est déterminée par spectroscopie de photoélectrons X (XPS).

On entend par nanoparticules, également appelées particules de tailles nanométriques, au sens de l'invention des particules dont toutes les dimensions sont comprises entre 1 et 100 nm, de préférence entre 1 et 50 nm. Lorsque l'expression « compris(e) entre une première valeur et une deuxième valeur » est utilisée dans la présente demande, il est entendu que les bornes sont inclues dans la gamme indiquée.

Le ou les solvants carbonés de la composition liquide mise en œuvre dans le procédé selon l'invention est avantageusement choisi parmi les solvants organiques et les mélanges d'un ou plusieurs solvants organiques et d'eau. A titre d'exemple de solvants organiques pouvant être utilisés, on peut citer les alcools, les esters d'acides carboxyliques, le diméthylsulfoxide, l'acétamide, le formamide, l'acétonitrile, les solvants aromatiques et les solvants hétéroaromatiques. De préférence, on choisit le ou les solvants organiques parmi les alcools, les esters d'acides carboxyliques, le diméthylsulfoxide, l'acétamide, le formamide, l'acétonitrile, le toluène et la pyridine, de préférence encore parmi le toluène et la pyridine. La composition liquide peut par exemple comprendre du toluène ou de la pyridine comme unique solvant organique ou un mélange de toluène et de pyridine.

La composition liquide comprenant un ou plusieurs solvants organiques peut comprendre un ou plusieurs constituants additionnels. Ces constituants additionnels peuvent notamment être choisis parmi les sels de métaux non nobles, les composés organiques, comprenant éventuellement un ou plusieurs hétéroatomes, notamment choisis parmi N, P, S et O, de préférence un ou plusieurs atomes d'azotes (N), et leurs mélanges, et des matériaux solides insolubles dans le ou les solvants organiques. L'expression composition liquide telle qu'utilisée dans le contexte de l'invention n'est donc pas limitée à des compositions constituées uniquement de composantes liquides mais couvre également des compositions contenant une ou plusieurs composantes solides insolubles, qui se trouvent alors en suspension dans le solvant ; l'ensemble formant une composition qui ne perd pas son caractère liquide de sorte qu'il est toujours possible de générer un aérosol à partir de cette composition.

Des exemples non-limitatifs de composés organiques contenant un ou plusieurs hétéroatomes pouvant être utilisés comprennent la mélamine ; le pyrazole ; la dicyanamide ; l'acridine ; la phénantroline ; la 1,3,5-triazine ; le 3,5 diamino-1,2,4-triazole ; la 2,4,6-tri(2-pyridyl)-S-trazine ; l'urée ; le 4-méthylimidazole ; le thiophène ; les sulfures et disulfures organiques ; le 4-mercaptopyridine disulfure ; la thiourée ; les dérivés de la thiourée et notamment la 1,3-di-p-tolyl-2-thiourée ; les dérivés du thiazole tels que le thiazole yellow G, le thiabendazole, le sulfathiazole ; le thicyanate, les isothiocyanates, la triphényl phosphine ; les phosphates organiques et les phosphonates organiques ; le 4-méthylimidazole étant préféré. La présence d'un ou plusieurs hétéroatomes permet de contribuer à l'introduction d'hétéroatomes dans les nanoparticules selon l'invention.

Les sels de métaux non nobles peuvent notamment être choisis parmi les sels de métaux de transition non nobles et de zinc, de préférence parmi les sels de fer, de cobalt, de molybdène, de nickel, de manganèse et de zinc, de préférence parmi les sels de fer et les sels de cobalt. Ces sels peuvent être utilisés seuls ou en mélanges. Il peut s'agir de sels minéraux ou organiques, de préférence de sels organiques. A titre d'exemple de sels minéraux, on peut citer les sulfates, les nitrates, et les phosphates et pour les sels organiques les acétylacétonates, tels que l'acétylacétonate de fer et l'acétylacétonate de cobalt. Par « métal de transition non noble », on entend tous les métaux de transition à l'exception des métaux nobles, c'est-à-dire l'or (Au), l'argent (Ag), le rhodium (Rh), l'osmium (Os), le palladium (Pd), le ruthénium (Ru), l'iridium (Ir) et le platine (Pt). En ce qui concerne l'utilisation de sulfates, de nitrates et/ou de phosphates, les inventeurs pensent que ces contre-ions du métal pourraient contribuer d'hétéroatomes dans les nanoparticules selon l'invention.

Lorsque la composition liquide comprend un ou plusieurs matériaux solides insolubles dans le ou les solvants organiques, de dimensions nanométriques, celui-ci ou ceux-ci se trouvent en suspension dans la composition liquide. Ces matériaux peuvent notamment être choisis parmi les nano-objets carbonés tels que les noirs de carbone, les nanotubes de carbone et le graphène, et/ou des nanoparticules à base de métal non noble tel que l'oxyde de fer. Leurs dimensions sont avantageusement inférieures à 100 nm.

Dans un mode de réalisation, la composition liquide est constituée d'un ou plusieurs solvants tels que définis ci-dessus. Dans un autre mode de réalisation, la composition liquide comprend de 100 % à 65% en poids d'un ou plusieurs solvants tels que définis ci-dessus, 0% à 10% en poids d'un ou plusieurs sels de métal non nobles tels que définis ci-dessus et 0% à 25% en poids d'un ou plusieurs composés organiques tels que définis ci-dessus. De préférence, la composition liquide comprend de 99.95% à 75 % en poids d'un ou plusieurs solvants tels que définis ci-dessus, 0,05% à 8 % en poids d'un ou plusieurs sels de métal non nobles tels que définis ci-dessus et 0 % à 17 % en poids d'un ou plusieurs composés organiques tels que définis ci-dessus, plus préférentiellement de 98.5% à 78 % en poids d'un ou plusieurs solvants tels que définis ci-dessus, 1,5% à 6 % en poids d'un ou plusieurs sels de métal non nobles tels que définis ci-dessus et 0% à 16 % en poids d'un ou plusieurs composés organiques tels que définis ci-dessus.

La transformation de la composition liquide de l'étape a) en nanoparticules ayant une teneur en carbone d'au moins 80% atomique en composition de surface et exemptes de métaux nobles est réalisée par pyrolyse laser. Cette méthode dont le principe de fonctionnement est bien connu de l'homme du métier permet de transformer la composition liquide ou gazeuse en une seule étape en nanoparticules à l'aide d'un dispositif (réacteur) de pyrolyse laser. De tels dispositifs sont par exemple décrit par Haggerty [3]. Développée dans les années 1980, la pyrolyse laser repose sur l'interaction en jets croisés entre un précurseur liquide ou gazeux et l'émission d'un laser CO₂ et nécessite donc une résonance entre le spectre d'émission du laser et le spectre d'absorption d'au moins un des réactifs. Le transfert d'énergie s'effectue par l'excitation des niveaux vibrationnels des molécules qui absorbent l'énergie laser. Le transfert d'énergie provoque une élévation de température dans la zone de réaction, les précurseurs sont dissociés, une flamme apparaît dans laquelle des nanoparticules sont formées sans interaction avec les parois du réacteur. Les précurseurs peuvent généralement être gazeux ou liquides. Dans le cas d'un liquide, le précurseur peut être injecté dans le réacteur après évaporation [6] ou sous forme d'aérosol de gouttelettes liquides [7].

Aussi, dans la présente invention, la composition liquide est d'abord transformée en aérosol, puis cet aérosol est entraîné à l'aide d'un gaz transporteur vers un réacteur de pyrolyse. La transformation de la composition liquide en aérosol est réalisée à l'aide d'un dispositif générateur d'aérosol. Ce type de dispositif est bien connu de l'homme du métier. A titre d'exemple de dispositifs générateurs d'aérosol pouvant être utilisés dans le cadre de l'invention, on peut citer les dispositifs générateurs d'aérosol piezzoélectrique comme par exemple celui commercialisé par la société RBI (France) sous le nom Pyrosol 7901 type. Le gaz transporteur est généralement constitué d'un gaz vecteur et d'un gaz absorbant de la radiation laser. En ce qui concerne le gaz vecteur, il s'agit ici d'un gaz qui n'absorbe pas à la longueur d'onde d'émission du laser utilisé. On distingue deux types de gaz vecteurs : les gaz vecteurs neutres et les gaz vecteurs réactifs. Un gaz vecteur neutre ne participe pas à la formation des nanoparticules tandis qu'un gaz vecteur réactif y participe. A titre d'exemple non-limitatif de gaz vecteurs neutres, on peut citer l'argon et l'hélium, l'argon étant préféré. A titre d'exemple non-limitatif de gaz vecteur réactif, on peut citer l'azote. Le gaz vecteur peut aussi être constitué d'un mélange de gaz vecteur neutre et de gaz vecteur réactif. La deuxième composante du gaz transporteur est un gaz absorbant de la radiation laser. On entend par gaz absorbant de la radiation laser au sens de l'invention une molécule sous forme gazeuse présentant une absorption à la longueur d'onde d'émission du laser utilisé, c'est-à-dire autour de 10,6 µm dans le cas d'un laser CO₂. L'homme du métier saura aisément identifier des gaz absorbant de la radiation laser appropriés. A titre d'exemple de gaz absorbant dans le cas d'un laser CO₂, on peut citer l'éthylène, l'hexafluorure de soufre et l'ammoniac (NH3). L'éthylène et l'ammoniac présentent l'avantage d'agir également comme précurseur d'azote et de carbone respectivement. De manière avantageuse, on peut par exemple utiliser un mélange d'argon (Ar) et d'ammoniac ou un mélange d'argon, d'ammoniac et d'éthylène ou un mélange d'azote et d'ammoniac comme gaz transporteur.

Dans le réacteur de pyrolyse, on applique un rayonnement laser à l'aérosol, puis on récupère en sortie du réacteur des nanoparticules exemptes de métaux nobles et présentant une teneur en carbone d'au moins 80% atomique en composition de surface. Le rayonnement laser peut être appliqué dans une configuration focalisée ou dans une configuration défocalisée. La source laser est avantageusement un laser CO₂.

Après la transformation de la composition liquide de l'étape a) en nanoparticule par pyrolyse laser à l'étape b), on peut éventuellement appliquer aux nanoparticules un traitement thermique sous atmosphère NH₃, argon ou oxygène, de préférence sous atmosphère NH₃ ou argon, à une température allant de 600 °C à 1100 °C. L'homme du métier saura aisément adapté la durée du traitement thermique, notamment en fonction de la température de traitement et de la quantité de nanoparticules à traiter. Le traitement thermique peut par exemple être réalisé à l'extérieur du réacteur dans un four ou à l'intérieur du réacteur de pyrolyse. Dans ce dernier cas la pyrolyse laser peut par exemple être utilisée en configuration de double étage. Des configurations de double étage pouvant être mises en œuvre dans le cadre de l'invention sont décrites dans la littérature ([8], [9]).

Les nanoparticules ayant éventuellement subi un traitement thermique peuvent être lavées afin d'éliminer des sous-produits de synthèse. Avantageusement, ce lavage est réalisé avec un solvant organique dans lequel les sous-produits de synthèse sont solubles. A titre d'exemple on peut citer l'acétone ainsi que les acétates d'éthyle et de méthyle.

Un second objet de l'invention porte sur des nanoparticules exemptes de métaux nobles et présentant une teneur en carbone d'au moins 80% atomique en composition de surface pouvant être obtenues par le procédé décrit ci-dessus en tant que telles. De telles nanoparticules exemptes de métaux nobles et présentant une teneur en carbone d'au moins 80% atomique en composition de surface sont notamment caractérisées en ce qu'ils présentent une surface spécifique élevée, notamment d'environ 100 m²/g à environ 1400 m²/g. Selon un premier mode de réalisation, la surface spécifique est d'environ au moins 100 m²/g, notamment de 100 m²/g à 300 m²/g. Ce type de matériau peut être obtenu selon le procédé de l'invention ne mettant en œuvre que les étapes a) et b). Selon un deuxième mode de réalisation, la surface spécifique est d'environ au moins 150 m²/g à environ 1400 m²/g. Ce type de matériau peut être obtenu selon le procédé de l'invention mettant en œuvre les étapes a), b) et c).

La teneur en carbone en composition de surface des nanoparticules selon l'invention est de préférence d'au moins 80 % atomique, plus préférentiellement d'au moins 90 % atomique. La teneur en azote en composition de surface des nanoparticules exemptes de métaux nobles selon l'invention est avantageusement de 0,5 % atomique à 15 % atomique. La teneur en métal en composition de surface des nanoparticules exemptes de métaux nobles selon l'invention est de 0 % atomique à 5 % atomique et avantageusement de 0,5% à 5 % atomique. Les teneurs en carbone, azote et métal en composition de surface des nanoparticules selon l'invention sont déterminées par spectroscopie de photoélectrons X (XPS).

Les nanoparticules selon l'invention trouvent une application particulière comme éléctrocatalyseurs de la réduction d'oxygène. Aussi, l'invention porte également sur l'utilisation des nanoparticules selon l'invention comme éléctrocatalyseurs de la réduction d'oxygène. Pour une telle utilisation, les nanoparticules présentent avantageusement, par rapport à une électrode à hydrogène, un potentiel de départ de réduction de l'oxygène supérieur ou égal à 0,600 V, de préférence supérieur à 0,750 V, de préférence encore supérieur à 0,800 V et plus préférentiellement supérieur à 0,900 V.

Les électrocatalyseurs selon l'invention peuvent être appliqués sur des électrodes utilisées par exemple dans des piles à combustibles. Aussi l'invention porte également sur une électrode comportant des nanoparticules selon l'invention, lesdites nanoparticules présentant, par rapport à une électrode à hydrogène, un potentiel de départ de réduction de l'oxygène supérieur à 0,750 V, de préférence supérieur à 0,800 V, plus préférentiellement supérieur à 0,900. V, ainsi que sur une pile à combustible comprenant au moins une telle électrode.

D'autres avantages et caractéristiques de l'invention ressortent de la description des exemples de réalisation non-limitatifs faite en référence aux figures suivantes :

### FIGURES

**Figure 1** **:** vue schématique d'un dispositif de synthèse de nanoparticules par pyrolyse laser pouvant être mis en œuvre dans le cadre de l'invention ;
**Figure 2** **:** Voltampérogramme des nanoparticules de l'exemple 1 enregistré en milieu acide ;
**Figure 3** **:** Voltampérogramme des nanoparticules de l'exemple 13 enregistré en milieu acide ;
**Figure 4** **:** Voltampérogramme des nanoparticules de l'exemple 21 enregistré en milieu basique ;
**Figure 5** **:** Voltampérogramme des nanoparticules de l'exemple 13 enregistré en milieu basique ;
**Figure 6** **:** vue schématique d'un dispositif de synthèse de nanoparticules par pyrolyse laser en configuration double étage pouvant être mis en œuvre dans le cadre de l'invention ;
**Figure 7** **:** Voltampérogramme des nanoparticules de l'exemple 23 enregistré en milieu acide ;
**Figure 8** **:** Voltampérogramme des nanoparticules de l'exemple 24 enregistré en milieu acide.

### EXEMPLES

Les différents exemples de réalisation qui suivent illustrent la mise en œuvre de l'invention.

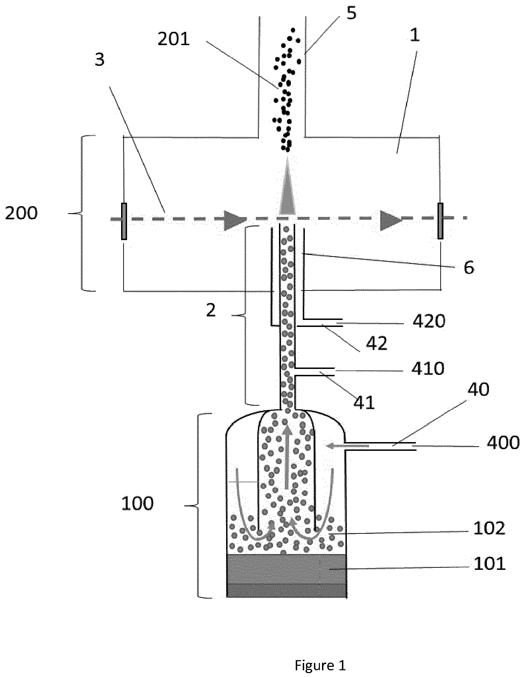

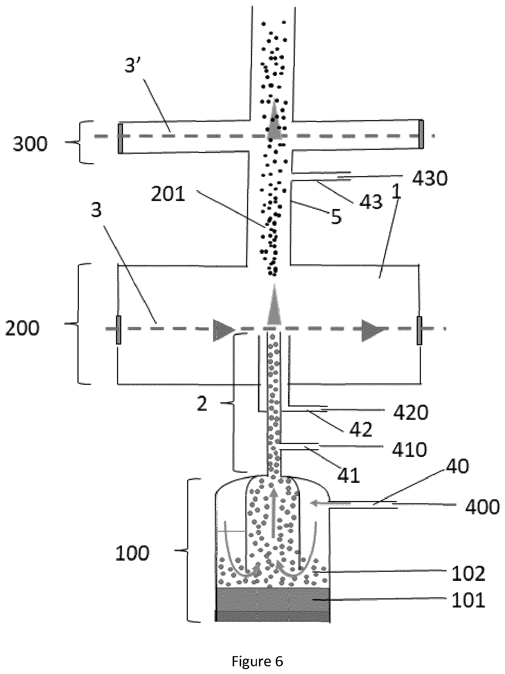

La synthèse de nanoparticules selon l'invention peut être réalisée à l'aide d'un dispositif de synthèse de nanoparticules tel que représenté schématiquement à la figure 1 ou 6. Ces dispositifs comportent
- un générateur d'aérosol 100 pour transformer une composition liquide 101 en aérosol 102
- un réacteur de pyrolyse 200, le réacteur de pyrolyse 200 comportant une chambre de synthèse 1, un canal 2 de communication entre le générateur d'aérosol 100 et la chambre de synthèse 1, un dispositif laser (non représenté) situé à l'extérieur de la chambre de synthèse 1, ledit dispositif laser comprenant au moins une source laser apte à émettre un faisceau laser 3 destiné à interagir avec ledit aérosol afin de former des nanoparticules 201 et un canal 5 de récupération des nanoparticules formées
   et
- éventuellement, lors de pyrolyse laser en configuration double étage, un deuxième réacteur de pyrolyse 300, le réacteur de pyrolyse 300 comportant un dispositif laser (non représenté), comprenant au moins une source laser apte à émettre un faisceau laser 3' destiné à interagir avec les dites nanoparticules 201 provenant du canal de récupération 5.

L'exposition au faisceau laser peut être faite de manière puisée, la fréquence d'exposition pouvant être de quelques microsecondes, ou, avantageusement, de manière continue. Il est possible d'employer un focalisateur, tel qu'un dispositif optique, qui est placé de telle sorte que la source optique est focalisée sur le précurseur. Le focalisateur peut notamment être une lentille cylindrique. Avantageusement, il peut s'agir d'une lentille de ZnSe dont la résistance au rayonnement infrarouge est importante. La focalisation permet d'augmenter la densité de puissance dans la zone d'exposition. Généralement, il est recommandé d'avoir une densité de puissance comprise entre 350 et 1200 W/cm² pour un faisceau non focalisé et de 2000 à 7000 W/cm² pour un faisceau localisé dans la zone focale de la lentille. Ainsi, il est préférable que la pyrolyse laser mette en œuvre un rayonnement laser d'une puissance d'au moins 600 W, le rayonnement étant focalisé pour procurer une densité de puissance d'au moins 2000 W/cm².

Le générateur d'aérosol 100 et/ou le canal 2 de communication et/ou le canal 5 de récupération, sont munis d'au moins une entrée 40, 41, 42, 43 de gaz transporteur. Typiquement, le dispositif de synthèse de nanoparticules comprend une entrée 40 de gaz vecteur neutre et/ou réactif 400 au niveau du générateur d'aérosol 100, une entrée 41 de gaz absorbant de la radiation laser et éventuellement de gaz vecteur neutre et/ou réactif 410 au niveau du canal 2 de communication et une entrée 42 de gaz vecteur neutre 420, également au niveau du canal 2 de communication, servant à confiner l'aérosol à la sortie du canal 2 de communication. Le canal 5 de récupération comporte avantageusement un collecteur équipé d'une barrière filtrante (non représentés) et une entrée 43 de gaz vecteur neutre et/ou réactif 430.

Dans le cadre des exemples de réalisation présentés ci-après les synthèses de nanoparticules ont été réalisées avec des dispositifs tels que décrits ci-dessus en utilisant un générateur d'aérosol Pyrosol type 7901 opérant à 800 kHz - 200 W commercialisé par la société RBI (France) servant à alimenter le réacteur de synthèse équipé d'un laser CO₂ de 2200 W (PRC, USA, Modèle SL 2200).

Les performances électrochimiques sont évaluées sur des électrodes poreuses réalisées par filtration de dispersion de catalyseur sur des supports de carbone poreux (feutre de carbone doté d'une couche microporeuse) utilisables dans un dispositif de type pile à combustible. Typiquement quelques mg de catalyseur sont introduits dans un solvant milieu liquide (par exemple de l'isopropanol), un traitement aux ultrasons permet d'obtenir une suspension qui est ensuite filtrée par aspiration sous vide sur un morceau de feutre de carbone déposé sur un fritté et surmonté d'un réservoir dans lequel la dispersion liquide contenant le catalyseur. Un masque en téflon permet de contrôler la surface sur laquelle est déposé le catalyseur (environ 0,785 cm²). Enfin la masse de catalyseur déposée est déterminée par pesée après séchage de l'électrode poreuse par différence entre la masse totale support poreux+électrocatalyseur et la masse du support poreux seule déterminée avant dépôt. On peut ainsi déterminer le chargement en catalyseur de l'électrode poreuse exprimé en mg/cm² de couche active.

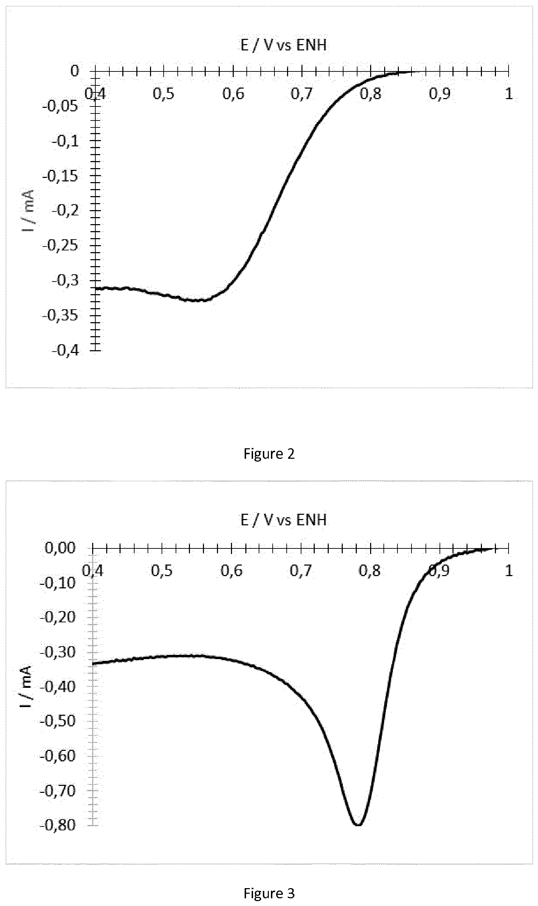

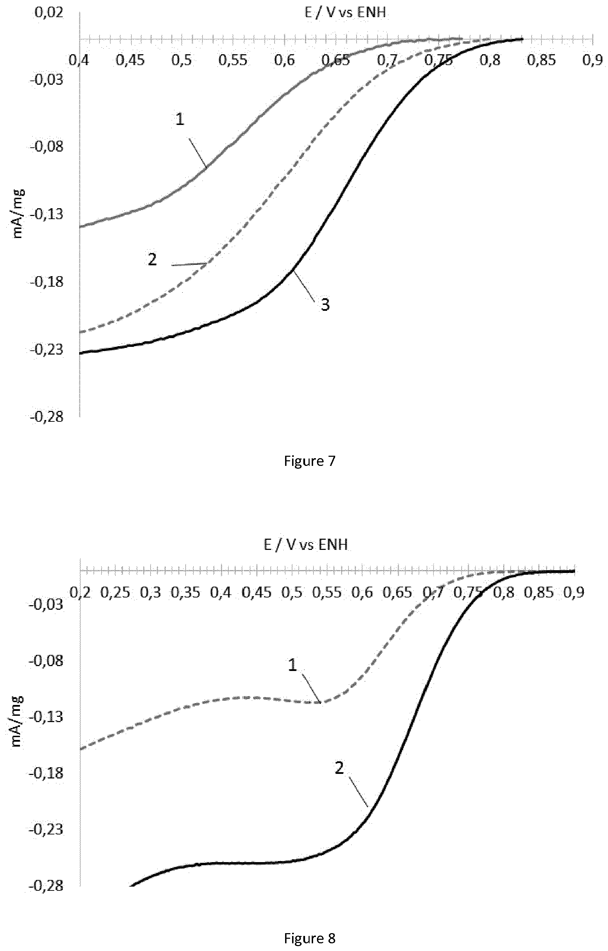

Sur ces électrodes poreuses la technique de voltampérométrie cyclique à balayage est utilisée à 5mV/s dans l'acide perchlorique 1M ou dans la soude 0.1M saturé d'argon ou d'oxygène. Le protocole de mesure en milieu acide et l'appareillage utilisés sont décrits dans Cheng et al. (Electrochimica Acta, 13 (2014) 293-300). Le protocole de mesure en milieu basique est une transposition de celui décrit dans Cheng et al. (Electrochimica Acta, 13 (2014) 293-300) par le fait que le milieu est du NaOH 0.1M à la place du HClO₄ et que l'électrode de référence est Hg/HgO remplie de NaOH 0.1M à la place de l'électrode au calomel saturé (ECS). Les voltampérogrammes présentés à titre d'exemple aux figures 2, 3 à 5, 7 et 8 pour les nanoparticules des exemples 1, 13, 21,23 et 24 correspondent à la différence entre la réponse enregistrée sous O₂ et sous Argon.. La propriété de réduction de O₂ est mise en évidence par la valeur de potentiel auquel apparait un courant de réduction de O₂ significatif. Tous les potentiels sont indiqués en volts par rapport à l'électrode normale à hydrogène.

La composition surfacique des nanoparticules a été déterminée par spectroscopie de photoélectrons X (XPS). Les analyses XPS ont été réalisées sur des électrodes poreuses dont le support poreux (feutre) est couvert d'une couche d'or, à l'aide d'un spectromètre Thermo K-Alpha à l'aide d'une source K-alpha aluminium à 1486,7 eV. L'analyse exploite le spectre enregistré sur la gamme d'énergie de liaison allant de 0 eV à 1350 eV, les photoélectrons étant détectés perpendiculairement à l'échantillon. Lorsque l'analyse XPS est faite après la mesure électrochimique, on détecte du chlore venant des ions ClO⁴⁻ du fait que la mesure électrochimique est faite dans l'acide perchlorique. On corrige donc la teneur en oxygène trouvée à l'aide de celle du chlore, soit : quantité d'oxygène dans le matériau = quantité totale - 4 fois celle de chlore.

La teneur en fer a été déterminée par fluorescence X à l'aide du montage expérimental décrit dans WO 2012/085401. La mesure est réalisée sur les électrodes poreuses comportant le matériau à analyser et exploite l'utilisation d'électrodes poreuses étalon permettant de construire une courbe d'étalonnage. Le montage utilise une source rayons X au cuivre, l'exploitation de l'intensité de la raie K Alpha du fer permet de déterminer (grâce à la courbe de calibration) la teneur massique en fer dans le matériau. La fabrication des électrodes poreuses étalon, les courbes de calibration réalisées à partir de celles-ci et la manière dont on détermine la teneur massique en fer est décrite dans la thèse de doctorat de Xi Cheng, pages 131-133 [10]. La surface spécifique des nanoparticules a été déterminée par analyse de l'isotherme d'adsorption-désorption d'azote avec l'appareil Micromeritics FlowSorb II 2300. La mesure est en général réalisée après un dégazage de l'échantillon à 250°C pendant 1h30 à 2h30.

### Exemple 1

Un électrocatalyseur de la réduction de l'oxygène selon l'invention a été synthétisé par pyrolyse laser à partir d'un aérosol contenant 14 g/L d'acétylacétonate de fer dissous dans la pyridine, entrainé par un débit d'argon de 800 sccm. Le débit d'ammoniac de 340 sccm. Le laser est focalisé. Le matériau obtenu produit à ≈ 0,130 g/h a été lavé à l'acétone, puis traité en milieu H₂SO₄ à température ambiante pendant 24 heures, puis rincé à l'eau pure, il montre une activité en réduction de l'oxygène à partir d'un potentiel de 0.811 V. Le voltampérogramme servant de base à la détermination du potentiel à partir duquel apparait une activité en réduction de l'oxygène est représenté à la figure 2. La masse de poudre produite est de 128 mg/h. L'analyse semi-quantitative de la surface par spectroscopie de photoélectrons X (XPS) donne la composition suivante (en % d'atomes): 92,37% de carbone (C), 4,90% d'azote (N), 2,10% d'oxygène (O) et 0,63% de fer (Fe). La teneur en fer dans la poudre déterminée par fluorescence X est de 7% en poids. Le chargement de l'électrode en catalyseur est de 2,70 mg/cm². La surface spécifique BET est de 153 m²/g.

### Exemple 2

Un électrocatalyseur de la réduction de l'oxygène selon l'invention a été synthétisé par pyrolyse laser d'un aérosol contenant 14 g/L d'acétylacétonate de fer dissous dans la pyridine, entrainé par un débit d'argon de 800 sccm. Le débit d'ammoniac est de 170 sccm. La masse d'aérosol entrainée est de 7,8 g/heure, le laser est focalisé. Le matériau brut obtenu produit à 0,200 g/h montre une activité en réduction de l'oxygène à partir d'un potentiel de 0,805 V. L'analyse semi-quantitative de la surface par spectroscopie de photoélectrons X (XPS) donne la composition suivante (en % d'atomes): 93,05% de carbone (C), 4,57% d'azote (N), 2,26% d'oxygène (O) et 0,12% de fer (Fe). La teneur en fer dans la poudre déterminée par fluorescence X est de 1,9% en poids. Le chargement de l'électrode en catalyseur est de 3,80 mg/cm². La surface spécifique BET est de 144m²/g.

### Exemple 3

Un électrocatalyseur de la réduction de l'oxygène selon l'invention a été synthétisé par pyrolyse laser dans une configuration de laser focalisé d'un aérosol comportant 14g/L d'acétylacétonate de fer, 225 g/L de 4-méthylimidazole dissous dans la pyridine. L'aérosol est entrainé par un débit d'argon de 1100 sccm. Le débit d'ammoniac est de 700 sccm. La masse d'aérosol entrainée est de 15,5 g/heure, le laser est focalisé. La masse de poudre produite est de 90 mg/h. L'analyse semi-quantitative de la surface par spectroscopie de photoélectrons X (XPS) donne la composition suivante (en % d'atomes): 88,97% de carbone (C), 6,67% d'azote (N), 3,71% d'oxygène (O) et 0,65% de fer (Fe). La teneur en fer dans la poudre déterminée par fluorescence X est de 13% en poids. L'électrode formée à partir de la poudre brute collectée montre une activité en réduction de l'oxygène à partir d'un potentiel d'environ 0,815 V. Le chargement de l'électrode en catalyseur est de 3,15 mg/cm².

### Exemple 4

Un électrocatalyseur de la réduction de l'oxygène selon l'invention a été synthétisé par pyrolyse laser formé par décomposition d'un aérosol comportant 14g/L d'acétylacétonate de fer, 220 g/L de méthylimidazole dissous dans la pyridine. L'aérosol est entrainé par un débit d'argon de 1160 sccm. Le débit d'ammoniac est de 500 sccm. La masse d'aérosol entrainée est de 15,5 g/heure, le laser est défocalisé. La masse de poudre produite est de 300 mg/h. L'analyse semi-quantitative de la surface par spectroscopie de photoélectrons X (XPS) du matériau brut donne la composition suivante (en % d'atomes): 92,02% de carbone (C), 5,64% d'azote (N), 2,15% d'oxygène (O) et 0,19% de fer (Fe). L'électrode formée à partir de la poudre brute collectée montre une activité en réduction de l'oxygène à partir d'un potentiel d'environ 0,845 V. Le chargement de l'électrode en catalyseur est de 3,2 mg/cm². L'aire spécifique BET du matériau brut est de 141m²/g.

### Exemple 5

Un électrocatalyseur de la réduction de l'oxygène selon l'invention a été synthétisé par pyrolyse laser par décomposition d'un aérosol comportant 14g/L d'acétylacétonate de fer et 220g/l de méthyl imidazole dissous dans le toluène. L'aérosol est entrainé par un débit d'argon de 1185 sccm. Le débit d'ammoniac est de 800 sccm. La masse d'aérosol entrainée est de 29,5 g/heure, le laser est focalisé. Le matériau est produit à 1,2 g/h. L'électrode formée à partir de la poudre lavée à l'acétone montre une activité en réduction de l'oxygène à partir d'un potentiel d'environ 0,800 V. Le chargement de l'électrode en catalyseur est de 3,8 mg/cm². L'analyse XPS en % d'atomes a été enregistrée sur une électrode après la mesure électrochimique et donne la composition suivante (en % d'atomes) : 92,64% de carbone (C), 3.52% d'azote (N), 3.84% d'oxygène (O). L'aire spécifique BET du matériau lavé à l'acétone est de 159 m²/g.

### Exemple 6

Un électrocatalyseur de la réduction de l'oxygène selon l'invention a été synthétisé par pyrolyse laser par décomposition d'un aérosol comportant 14g/L d'acétylacétonate de cobalt dissous dans le toluène. L'aérosol est entrainé par un débit d'argon de 1185 sccm. Le débit d'ammoniac est de 1100 sccm. La masse d'aérosol entrainée est de 25,3 g/heure, le laser est focalisé. Le matériau est produit à 2,8 g/h. L'électrode formée à partir de la poudre lavée à l'acétone montre une activité en réduction de l'oxygène à partir d'un potentiel d'environ 0,810 V. Le chargement de l'électrode en catalyseur est de 3,0 mg/cm².

### Exemple 7

Un électrocatalyseur de la réduction de l'oxygène selon l'invention a été synthétisé par pyrolyse laser par décomposition d'un aérosol comportant 14g/L d'acétylacétonate de Fer dissous dans le toluène. L'aérosol est entrainé par un débit d'Azote de 1185 sccm. Le débit d'ammoniac est de 1100 sccm. La masse d'aérosol entrainée est de 17,7 g/heure, le laser est focalisé. Le matériau est produit à 0,68 g/h. L'électrode formée à partir de la poudre lavée à l'acétone montre une activité en réduction de l'oxygène à partir d'un potentiel d'environ 0,850 V. Le chargement de l'électrode en catalyseur est de 3,0 mg/cm².

### Exemple 8

Le matériau de l'Exemple 2 a été traité pendant 12 minutes sous ammoniac (NH₃) à 900°C dans un four. Ce traitement augmente le potentiel auquel on observe un courant significatif en réduction de O₂, celui-ci passe de 0,805 V à 0,900 V. Le chargement de l'électrode en catalyseur est de 2,80 mg/cm².

Cet exemple montre qu'un traitement thermique sous NH₃ améliore les performances d'un électrocatalyseur présentant déjà à l'issue de la synthèse une activité significative en réduction d'oxygène.

### Exemple 9

Un matériau électrocatalytique a été synthétisé par pyrolyse laser à partir d'un aérosol contenant de l'acétylacétonate de fer à 14g/L, et de 4-méthylimidazole à 220g/L dissous dans la pyridine, entrainé par un débit d'argon de 1095 sccm. Le débit d'ammoniac est de 175 sccm. La masse d'aérosol entrainée est de 15,5 g/heure, le laser est focalisé. Le matériau présente un potentiel de début de réduction de O₂ environ 600mV. Après un lavage à l'acétone et un unique traitement thermique pendant 12 min sous ammoniac à 900 °C, le potentiel de départ de réduction de O₂ se situe à 890 mV, et la surface spécifique BET du matériau est relativement élevée (172 m²/g). La surface spécifique du matériau non recuit lavé à l'acétone est de 103 m²/g. Le chargement de l'électrode en catalyseur est de 2,50 mg/cm².

Cet exemple montre que la réponse en réduction de l'oxygène est significativement améliorée par un seul traitement thermique sous ammoniac.

L'analyse XPS en % d'atomes a été enregistrée sur une électrode après la mesure électrochimique et donne la composition suivante : 93.55% de carbone (C), 3.81% d'azote (N), 2.59% d'oxygène (O), 0,5% de Fer (Fe).

Après traitement thermique sous NH₃, et lavage à l'acétone la surface spécifique BET est de 172 m²/g et la teneur en fer teneur dans la poudre après recuit sous NH₃ déterminée par fluorescence X est de 3,6% en poids.

### Exemple 10

Un matériau précurseur a été synthétisé par pyrolyse laser à partir d'un aérosol contenant un mélange toluène/pyridine (25%/75% en volume) et de l'acétylacétonate de fer à 14g/L, entrainé par un débit d'argon de 1185 sccm d'argon. Le débit d'ammoniac est de 185 sccm. Le matériau a été produit à 1,5 g/h. La masse d'aérosol entrainée est de 18.5 g/heure, le laser est focalisé. Ce matériau a été lavé à l'acétone puis traité sous ammoniac à 1100°C pendant 20 minutes, sa surface spécifique très élevée est d'environ 600 m²/g. L'électrocatalyseur final ainsi obtenu montre un potentiel de départ de réduction de O₂ à 0,925 V. La mesure de la teneur en fer après mesure électrochimique indique une teneur en poids de 2,5% de fer. Le chargement de l'électrode en catalyseur est de 1,65 mg/cm².

L'analyse semi-quantitative de la surface après traitement thermique enregistrée sur une électrode après la mesure électrochimique par spectroscopie de photoélectrons X (XPS) donne la composition suivante (en % d'atomes): 97,05% de carbone (C), 1,58% d'azote (N) et 1,36% d'oxygène (O).

### Exemple 11

Un matériau précurseur a été synthétisé par pyrolyse laser à partir d'un aérosol contenant du toluène dans lequel est dissous de l'4-méthylimidazole à 220g/L et de l'acétylacétonate de fer à 14g/L, entrainé par un débit d'argon de 1185 sccm d'argon. Le débit d'ammoniac est 340 sccm. La masse d'aérosol entrainée est de 24,7 g/heure, le laser est focalisé. Le matériau est produit à un débit de 3,48 g/h. Ce matériau a été lavé à l'acétone puis traité sous ammoniac à 1100°C pendant 20 minutes, sa surface spécifique est de l'ordre de 510 m²/g. L'électrocatalyseur final ainsi obtenu montre un potentiel de départ de réduction de O₂ à environ 0,895 V. Le chargement de l'électrode en catalyseur est de 1,75 mg/cm².

L'analyse semi-quantitative de la surface après traitement thermique enregistré sur une électrode après la mesure électrochimique par spectroscopie de photoélectrons X (XPS) donne la composition suivante (en % d'atomes): 97,79% de carbone (C), 0,86% d'azote (N) et 1,35% d'oxygène (O).

### Exemple 12

Un matériau précurseur produit à 4,1 g/h a été synthétisé par pyrolyse laser à partir d'un aérosol contenant du toluène dans lequel est dissous de l'acétylacétonate de fer à 14g/L, entrainé par un débit d'argon de 1185 sccm d'argon. Le débit d'ammoniac et de 170 sccm. La masse d'aérosol entrainée est de 24.6 g/heure, le laser est focalisé. Ce matériau a été lavé à l'acétone puis traité sous ammoniac à 1100°C pendant 20 minutes sa surface spécifique très élevée est d'environ 825 m2/g . L'électrocatalyseur final ainsi obtenu montre un potentiel de départ de réduction de O₂ à environ 0,930 V. La teneur en fer déterminée par fluorescence X sur une électrode après la mesure électrochimique est 1,3% en poids de fer. Le chargement de l'électrode en catalyseur est de 1,8 mg/cm².

L'analyse semi-quantitative de la surface par spectroscopie de photoélectrons X (XPS) après traitement thermique enregistré sur une électrode après la mesure électrochimique donne la composition suivante (en % d'atomes): 97,61% de carbone (C), 1,27% d'azote (N) et 1,12% d'oxygène (O).

### Exemple 13

Un matériau précurseur produit à 3,41 g/h a été synthétisé par pyrolyse laser à partir d'un aérosol contenant du toluène dans lequel est dissous de l'acétylacétonate de fer à 14g/L, entrainé par un débit d'argon de 1185 sccm d'argon. Le débit d'ammoniac est de 800 sccm. La masse d'aérosol entrainée est de 27,4 g/heure, le laser est focalisé. Ce matériau a été lavé à l'acétone puis traité sous ammoniac à 1100°C pendant 20 minutes sa surface spécifique très élevée est de 1130 m²/g. L'électrocatalyseur final ainsi obtenu montre un potentiel de départ de réduction de O₂ à environ 0,960 V. La teneur en fer déterminée par fluorescence X sur une électrode après la mesure électrochimique est 0,8 % en poids de fer. Le chargement de l'électrode en catalyseur est de 1,6 mg/cm².

L'analyse semi-quantitative de la surface par spectroscopie de photoélectrons X (XPS) après traitement thermique enregistré sur une électrode après la mesure électrochimique donne la composition suivante (en % d'atomes): 96,75% de carbone (C), 1,32% d'azote (N) et 1,93% d'oxygène (O).

### Exemple 14

Un matériau précurseur produit à environ 3 g/h a été synthétisé par pyrolyse laser à partir d'un aérosol contenant de la pyridine dans lequel sont dissous de l'4-méthylimidazole à 220g/L et de l'acétylacétonate de fer à 14g/L, entrainé par un débit d'argon de 1055 sccm d'argon. Le débit d'éthylène est de 165 sccm d'éthylène, ce dernier servant à la fois d'absorbant de la radiation laser et de précurseur de carbone. La quantité d'aérosol entrainée est de 16,3 g/h, le laser est focalisé. Ce matériau a été lavé à l'acétone puis traité sous ammoniac à 1100°C pendant 12 minutes, sa surface spécifique très élevée est d'environ 784 m2/g. L'électrocatalyseur final ainsi obtenu puis lavé à l'acétone montre un potentiel de départ de réduction de O₂ à environ 0,950 V. La teneur en fer déterminée par fluorescence X sur une électrode après mesure électrochimique est 1% en poids de fer. Le chargement de l'électrode en catalyseur est de 1,60 mg/cm².

L'analyse semi-quantitative de la surface par spectroscopie de photoélectrons X (XPS) après traitement thermique enregistré sur une électrode après la mesure électrochimique donne la composition suivante (en % d'atomes): 98,52% de carbone (C), 1,33% d'azote (N), 0,10% d'oxygène (O) et 0,05% de fer (Fe).

### Exemple 15

Un matériau précurseur produit à ≈ 2 g/h a été synthétisé par pyrolyse laser à partir d'un aérosol contenant de la pyridine dans lequel sont dissous de l'4-méthylimidazole à 220g/L et de l'acétylacétonate de fer à 14g/L, entrainé par un débit d'argon de 1185 sccm d'argon. Le débit d'ammoniac est de 170 sccm et le débit d'éthylène est de 176 sccm, ces derniers servant à la fois d'absorbant de la radiation laser et respectivement de précurseur d'azote et de carbone. Ce matériau a été traité sous ammoniac à 1100°C pendant 20 minutes, sa surface spécifique est très élevée d'environ 684 m2/g. L'électrocatalyseur final ainsi obtenu montre un potentiel de départ de réduction de O₂ à environ 0,900 V. La teneur en fer par fluorescence X mesurée sur une électrode après mesure électrochimique est de 1,5% en poids. Le chargement de l'électrode en catalyseur est de 1,45 mg/cm².

L'analyse semi-quantitative de la surface par spectroscopie de photoélectrons X (XPS) après traitement thermique donne la composition suivante (en % d'atomes): 97,85% de carbone (C), 0,76% d'azote (N) et 1,39% d'oxygène (O).

### Exemple 16 (hors invention)

Un matériau précurseur produit à environ 2,5 g/h a été synthétisé par pyrolyse laser à partir d'un aérosol contenant seulement du toluène entrainé par un débit d'argon de 1185 sccm d'argon. Le débit d'ammoniac est de 170 sccm. La quantité d'aérosol entrainée est de 23,3 g/h, le laser est focalisé. Ce matériau a été lavé à l'acétone puis traité sous ammoniac à 1100°C pendant 20 minutes, sa surface spécifique très élévée est d'environ 795 m2/g. L'électrocatalyseur final ainsi obtenu montre un potentiel de départ de réduction de O₂ à environ 0,840 V. Le chargement de l'électrode en catalyseur est de 2,5 mg/cm².

L'analyse semi-quantitative de la surface par spectroscopie de photoélectrons X (XPS) après traitement thermique enregistré sur une électrode après mesure électrochimique donne la composition suivante (en % d'atomes): 98,68% de carbone (C), 0,72% d'azote (N) et 0,60% d'oxygène (O).

### Exemple 17

Un matériau précurseur produit à environ 1 g/h a été synthétisé par pyrolyse laser à partir d'un aérosol contenant un mélange de toluène et de pyridine (25% / 75% en volume) sans sel de fer, entrainé par un débit d'argon de 1185 sccm d'argon. Le débit d'ammoniac est de 170 sccm. La quantité d'aérosol entrainée est de 20,25 g/h, le laser est focalisé. Ce matériau a été traité sous ammoniac à 1100°C pendant 20 minutes. L'électrocatalyseur final ainsi obtenu montre un potentiel de départ de réduction de O₂ à environ 0,860 V. Le matériau lavé à l'acétone possède une surface spécifique BET très élevée d'environ 1480 m²/g. Le chargement de l'électrode en catalyseur est de 2,7 mg/cm².

L'analyse semi-quantitative de la surface par spectroscopie de photoélectrons X (XPS) après traitement thermique enregistré sur une électrode après mesure électrochimique donne la composition suivante (en % d'atomes): 96.78% de carbone (C), 1,70 % d'azote (N) et 1,52% d'oxygène (O).

### Exemple 18 (hors invention)

Un matériau précurseur produit à environ 3 g/h a été synthétisé par pyrolyse laser à partir d'un aérosol contenant un mélange de toluène dans lequel est dissous du 4-methylimidazole à 220g/L, sans sel de fer, entrainé par un débit d'argon de 1185 sccm d'argon. Le débit d'ammoniac est de 170 sccm. La quantité d'aérosol entrainée est de 20,8 g/h, le laser est focalisé. Ce matériau a été traité, lavé à l'acétone et traité sous ammoniac à 1100°C pendant 20 minutes, sa surface spécifique BET très élevée est d'environ 687 m²/g. L'électrocatalyseur final ainsi obtenu montre un potentiel de départ de réduction de O₂ à environ 0,750 V. Le chargement de l'électrode en catalyseur est de 2,8 mg/cm².

L'analyse semi-quantitative de la surface par spectroscopie de photoélectrons X (XPS) après traitement thermique, enregistré sur une électrode après mesure électrochimique donne la composition suivante (en % d'atomes): 97,03% de carbone (C), 1,46 % d'azote (N) et 1,51% d'oxygène (O).

### Exemple 19

Un matériau précurseur produit à environ 0,6 g/h a été synthétisé par pyrolyse laser dans une configuration de laser focalisé à partir d'un aérosol contenant de la pyridine dans laquelle sont dissous du 4-methylimidazole à 220 g/L et de l'acétylacétonate de fer à 14 g/L entrainé par un débit d'argon de 1185 sccm d'argon. Le débit d'ammoniac est de 170 sccm. La quantité d'aérosol entrainée est de 16 g/h, le laser est focalisé. Ce matériau a été lavé à l'acétone et traité sous Argon à 1100°C pendant 20 minutes, sa surface spécifique est d'environ 183 m²/g. L'électrocatalyseur final ainsi obtenu montre un potentiel de départ de réduction de O₂ à environ 0,830 V. Le chargement de l'électrode en catalyseur est de 2,8 mg/cm².

L'analyse semi-quantitative de la surface par spectroscopie de photoélectrons X (XPS) après traitement thermique, enregistré sur une électrode (sans mesure électrochimique) donne la composition suivante (en % d'atomes): 96,57% de carbone (C), 1,13 % d'azote (N) et 2,3 % d'oxygène (O).

### Exemple 20

Un matériau précurseur produit à environ 0,250 g/h a été synthétisé par pyrolyse laser dans une configuration de laser focalisé à partir d'un aérosol contenant de la pyridine dans laquelle est dissous de l'acétylacétonate de fer à 14 g/L entrainé par un débit d'argon de 1185 sccm d'argon. Le débit d'ammoniac est de 340 sccm. La quantité d'aérosol entrainée est de 14.7 g/h, le laser est focalisé. Ce matériau a été lavé à l'acétone et traité sous Argon à 1100°C pendant 20 minutes, sa surface spécifique est d'environ 206 m2/g. L'électrocatalyseur final ainsi obtenu montre un potentiel de départ de réduction de O₂ à environ 0,840 V. Le chargement de l'électrode en catalyseur est de 3,1 mg/cm².

L'analyse semi-quantitative de la surface par spectroscopie de photoélectrons X (XPS) après traitement thermique, enregistré sur une électrode (sans mesure électrochimique) donne la composition suivante (en % d'atomes): 96,63% de carbone (C), 0,82 % d'azote (N), 2,41% d'oxygène (O) et 0,14 % de Fer (Fe).

### Exemple 21

Un matériau précurseur produit à environ 3,4 g/h a été synthétisé par pyrolyse laser dans une configuration de laser focalisé à partir d'un aérosol contenant du toluène dans lequel est dissous de l'acétylacétonate de fer à 14g/L, entrainé par un débit d'argon de 1185 sccm d'argon. Le débit d'ammoniac est de 800 sccm. La quantité d'aérosol entrainée est de 27,4 g/h, le laser est focalisé. Ce matériau a été lavé à l'acétone et traité sous Argon à 1100°C pendant 20 minutes, sa surface spécifique est de 153 m2/g. L'électrocatalyseur final ainsi obtenu un potentiel de départ de réduction de O₂ à environ 0,865V. Le chargement de l'électrode en catalyseur est d'environ 3,8 mg/cm².

L'analyse semi-quantitative de la surface par spectroscopie de photoélectrons X (XPS) après traitement thermique, enregistré sur une électrode après mesure électrochimique donne la composition suivante (en % d'atomes): 93,06% de carbone (C), 1,62 % d'azote (N), 5,32% d'oxygène (O).

### Exemple 22

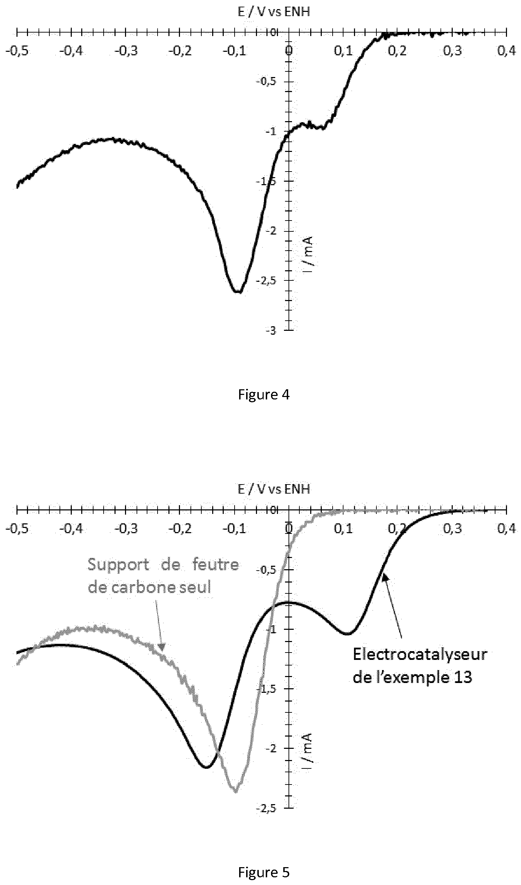

Les mesures de la réduction du dioxygène (O₂) en milieu basique NaOH à 0,1 M sont enregistrées sur le matériau obtenu selon les exemples 21 et 13, et apparaissent respectivement en figure 4 et 5.

La masse d'électrocatalyseur utilisée dans ces analyses sont respectivement, de 1,8 mg et de 3,19mg. La voltamétrie cyclique enregistrée à 10 mV/s montre un départ de la réduction du dioxygène O₂ respectivement à environ 0,300 V et 0.190V. Ceux-ci sont très supérieurs à ceux enregistrés sur le support de feutre de carbone situé à environ 0,090 V.

### Exemple 23

Cet exemple illustre l'intérêt de la pyrolyse laser double étage. Il compare les performances électrochimiques de trois matériaux, le premier synthétisé en configuration simple étage et les deuxième et troisième synthétisés en configuration double étage.

Ces synthèses sont réalisées à partir d'un aérosol contenant du toluène dans lequel est dissous de l'acétylacétonate de fer à 14g/L, entrainé par un débit d'argon de 1185 sccm, pour lesquels le débit d'ammoniac au premier étage est de 600 sccm, et la quantité d'aérosol entrainée est de 19,8 g/h.

Le matériau de la voltampérométrie cyclique n°1 est synthétisé en configuration simple étage, avec un laser focalisé il est produit à environ 4,8 g/h et montre un départ en réduction de O₂ à environ 720 mV/ENH. Le chargement de l'électrode est de 2,43mg/cm².

Le matériau de la voltampérométrie cyclique n°2 est synthétisé avec un second passage d'un laser CO₂ au deuxième étage (laser défocalisé) et un débit d'ammoniac injecté au deuxième étage de 200 sccm, il est produit à environ 3,4 g/h et montre un potentiel de départ réduction de O₂ à environ 785 mV et donc une amélioration de la performance d'environ 65 mV par rapport au matériau de la voltampérométrie cylique n°1 du matériau synthétisé en configuration de simple étage. Le chargement de l'électrode est de 2,5mg. Le matériau lavé à l'acétone possède une surface spécifique BET d'environ 173m²/g

Le matériau de la voltampérométrie cyclique n°3 est synthétisé avec un second passage d'un laser CO₂ au deuxième étage et un débit d'ammoniac injecté au deuxième étage de 1100 sccm, il est produit à environ 3,1 g/h et montre un potentiel de départ réduction de O₂ d'environ 825 mV et donc une amélioration de la performance d'environ 105 mV par rapport au matériau de la voltampérométrie cylique n°1 du matériau synthétisé en configuration de simple étage. Le chargement de l'électrode est de 2,68mg. Le matériau lavé à l'acétone possède une surface spécifique BET d'environ 183m²/g

### Exemple 24

Cet exemple illustre également l'intérêt de la pyrolyse laser double étage mais pour des conditions de synthèse au premier étage différentes de l'exemple précédent. Il compare les performances électrochimiques de deux matériaux, le premier synthétisé en configuration simple étage et le deuxième synthétisé en configuration double étage.

Ces synthèses sont réalisés à partir d'un aérosol contenant du toluène dans lequel est dissous de l'acétylacétonate de fer à 14g/L, entrainé par un débit d'argon de 1185 sccm, pour lesquels le débit d'ammoniac au premier étage est de 800 sccm d'ammoniac, et la quantité d'aérosol entrainée est d'environ 24 g/h.

Le matériau de la voltampérométrie cyclique n°1 est synthétisé en configuration simple étage (laser focalisé), il est produit à environ 4,8 g/h et montre un départ en réduction de O₂ à environ 800 mV/ENH. Ce matériau possède une surface spécifique BET d'environ 147 m²/g. Le chargement de l'électrode est de 3,0mg

Le matériau de la voltampérométrie cyclique n°2 est synthétisé avec un second passage d'un laser CO₂ au deuxième étage (laser défocalisé) et un débit d'ammoniac injecté au deuxième étage de 1100 sccm, il est produit à environ 2,4 g/h et montre un potentiel de départ réduction de O₂ à environ 850 mV et donc une amélioration de la performance d'environ 50 mV par rapport au matériau de la voltampérométrie cylique n°1 du matériau synthétisé en configuration de simple étage. Ce matériau possède une surface spécifique BET d'environ 200 m²/g. Le chargement de l'électrode est de 2,48mg

### Références bibliographiques

[1] M. Shao, Q. Chang, J-P Dodelet and R. Chenitz Chem. Rev. 2016, 116, 3594-3657;
[2] N. P. Subramanian, X. Li, V. Nallathambi, S. P. Kumaraguru, H. Colon-Mercado, G. Wu, J-W Lee, B. N. Popov Journal of Power Sources 188 (2009) 38-44;
[3] J. Haggerty, W.R. Cannon Laser-Induced Chemical Processes Ed. J.I. Steinfield, Plénum, New York, 1981 pp 165-241;
[4] E. Marino, B. Bouchet-Fabre, D. Porterat, C. Reynaud, Diamond & Related Materials 14 (2005) 1120;
[5] Maekawa, Y.; Ishihara, A.; Kim, J.-H.; Mitsushima, S.; Ota, K.-i . Solid-State Lett. 2008, 11 (7), B109-B112;
[6] WO 2008/095774 A1 ;
[7] Cauchetier et al. (J. Am. Ceram. Soc. 77 [4] 993-98 (994), Leconte et al. (J. Colloid and Interface Science 313 (2007) 511-518) et WO2016009328 ;
[8] US 2011/0183234 ;
[9] WO 2014/079997 A1 ;
[10] Cheng, X.; Nouvelles approches pour la caractérisation d'électrodes poreuses pour la réduction de O2: des structures modèles à base de platine aux structures exemptes de métaux nobles, 2013 ; https://tel.archives-ouvertes.fr/tel-01022758/file/ThA_se_2010-2013_Xi_Cheng.pdf.

## Revendications

1. Procédé de préparation de nanoparticules exemptes de métaux nobles et présentant une teneur en carbone en composition de surface d'au moins 80 % atomique, ledit procédé comprenant les étapes suivantes :
a) fourniture d'une composition liquide constituée d'un ou plusieurs solvants carbonés, un ou plusieurs sels de métaux non nobles, et éventuellement un ou plusieurs constituants additionnels choisis parmi les composés organiques, comprenant éventuellement un ou plusieurs hétéroatomes, et des matériaux solides insolubles dans le ou les solvants carbonés, ces matériaux solides insolubles étant choisis parmi les nanoparticules à base de métal non noble, et exempte de métaux nobles ou d'une composition liquide constituée d'un mélange de toluène et de pyridine;
b) transformation de la composition liquide de l'étape a) en nanoparticules à base de carbone et exempts de métaux nobles par pyrolyse laser ;
c) éventuellement traitement thermique des nanoparticules obtenus à l'étape b) sous atmosphère NH₃, argon ou oxygène à une température allant de 600 à 1100 °C.

2. Procédé selon la revendication 1, dans lequel le sel de métal est un sel de fer.

3. Procédé selon l'une des revendications précédentes, dans lequel la composition liquide comprend en outre un ou plusieurs composés organiques additionnels, comprenant éventuellement un ou plusieurs hétéroatomes.

4. Procédé selon la revendication précédente, dans lequel le ou les composés organiques sont choisis parmi la mélamine ; le pyrazole ; la dicyanamide ; l'acridine ; la phénantroline ; la 1,3,5-triazine ; le 3,5 diamino-1,2,4-triazole ; la 2,4,6-tri(2-pyridyl)-S-trazine ; l'urée ; le 4-méthylimidazole ; le thiophène ; les sulfures et disulfures organiques ; le 4-mercaptopyridine disulfure ; la thiourée ; les dérivés de la thiourée et notamment la 1,3-di-p-tolyl-2-thiourée ; les dérivés du thiazole tels que le thiazole yellow G, le thiabendazole, le sulfathiazole ; le thiocyanate, les isothiocyanates, la triphényl phosphine ; les phosphates organiques et les phosphonates organiques.

5. Procédé selon la revendication précédente, dans lequel le composé organique est le 4-méthylimidazole.

6. Procédé selon l'une des revendications précédentes, dans lequel le ou les solvants carbonés sont choisis parmi les alcools, les esters d'acides carboxyliques, le diméthylsulfoxide, l'acétamide, le formamide, l'acétonitrile, les solvants aromatiques et les solvants hétéroaromatiques.

7. Procédé selon la revendication précédente, dans lequel le ou les solvants carbonés sont choisis parmi le toluène et la pyridine.

## Patentansprüche

1. Verfahren zur Herstellung von Nanopartikeln, die frei von Edelmetallen sind und eine Oberflächenzusammensetzung mit einem Kohlenstoffgehalt von mindestens 80 Atom-% aufweisen, wobei das Verfahren die folgenden Schritte umfasst:
a) Bereitstellen einer flüssigen Zusammensetzung, bestehend aus einem oder mehreren kohlenstoffhaltigen Lösungsmitteln, einem oder mehreren Nicht-Edelmetallsalzen und gegebenenfalls einem oder mehreren zusätzlichen Bestandteilen, ausgewählt aus organischen Verbindungen, die gegebenenfalls ein oder mehrere Heteroatome enthalten, und festen Materialien, die in dem/den kohlenstoffhaltigen Lösungsmittel(n) unlöslich sind, wobei diese unlöslichen festen Materialien ausgewählt sind aus Nanopartikeln auf Nicht-Edelmetallbasis und frei von Edelmetallen, oder einer flüssigen Zusammensetzung, bestehend aus einer Mischung von Toluol und Pyridin;
b) Umwandlung der flüssigen Zusammensetzung aus Schritt a) in edelmetallfreie Nanopartikel auf Kohlenstoffbasis durch Laserpyrolyse;
c) gegebenenfalls Wärmebehandlung der in Schritt b) erhaltenen Nanopartikel unter NH₃-, Argon- oder Sauerstoffatmosphäre bei einer Temperatur von 600 bis 1100°C.

2. Verfahren nach Anspruch 1, wobei das Metallsalz ein Eisensalz ist.

3. Verfahren nach einem der vorhergehenden Ansprüche, wobei die flüssige Zusammensetzung weiterhin eine oder mehrere zusätzliche organische Verbindungen umfasst, die gegebenenfalls ein oder mehrere Heteroatome enthalten.

4. Verfahren nach dem vorhergehenden Anspruch, wobei die organische(n) Verbindung(en) ausgewählt ist (sind) aus Melamin; Pyrazol; Dicyanamid; Acridin; Phenantrolin; 1,3,5-Triazin; 3,5-Diamino-1,2,4-triazol; 2,4,6-Tri(2-pyridyl)-S-trazin; Harnstoff; 4-Methylimidazol; Thiophen; organischen Sulfiden und Disulfiden; 4-Mercaptopyridindisulfid; Thioharnstoff; Thioharnstoffderivaten und insbesondere 1,3-Di-p-tolyl-2-thioharnstoff; Thiazolderivaten wie Thiazolgelb G, Thiabendazol, Sulfathiazol; Thiocyanat, Isothiocyanate, Triphenylphosphin; organischen Phosphaten und organischen Phosphonaten.

5. Verfahren nach dem vorhergehenden Anspruch, wobei die organische Verbindung 4-Methylimidazol ist.

6. Verfahren nach einem der vorhergehenden Ansprüche, wobei das kohlenstoffhaltige Lösungsmittel oder die kohlenstoffhaltigen Lösungsmittel ausgewählt sind aus Alkoholen, Carbonsäureestern, Dimethylsulfoxid, Acetamid, Formamid, Acetonitril, aromatischen Lösungsmitteln und heteroaromatischen Lösungsmitteln.

7. Verfahren nach dem vorhergehenden Anspruch, wobei das/die kohlenstoffhaltige(n) Lösungsmittel ausgewählt ist/sind aus Toluol und Pyridin.

## Claims

1. Method for preparing nanoparticles free of noble metals and having a carbon content in the surface composition of at least 80 atomic %, said method comprising the following steps:
a) providing a liquid composition consisting of one or more carbon-based solvents, one or more salts of non-noble metals, and optionally one or more additional components selected from organic compounds, optionally comprising one or more heteroatoms, and solid materials insoluble in the one or more carbon-based solvents, these insoluble solid materials being selected from nanoparticles containing non-noble metal, and free of noble metals or a liquid composition consisting of a mixture of toluene and of pyridine;
b) transforming the liquid composition of step a) into nanoparticles containing carbon and free of noble metals by laser pyrolysis;
c) optionally heat treating the nanoparticles obtained in step b) under an NH₃, argon or oxygen atmosphere at a temperature ranging from 600 to 1100°C.

2. Method according to claim 1, wherein the metal salt is an iron salt.

3. Method according to one of the preceding claims, wherein the liquid composition further comprises one or more additional organic compounds, optionally comprising one or more heteroatoms.

4. Method according to the preceding claim, wherein the one or more organic compounds are selected from melamine; pyrazole; dicyanamide; acridine; phenanthroline; 1,3,5-triazine; 3,5 diamino-1,2,4-triazole; 2,4,6-tri(2-pyridyl)-S-trazine; urea; 4-methylimidazole; thiophene; the organic sulphides and disulphides; 4-mercaptopyridine disulphide; thiourea; the derivatives of thiourea and in particular 1,3-di-p-tolyl-2-thiourea; the derivatives of thiazole such as thiazole yellow G, thiabendazole, sulfathiazole; thiocyanate, the isothiocyanates, triphenyl phosphine; the organic phosphates and the organic phosphonates.

5. Method according to the preceding claim, wherein the organic compound is 4-methylimidazole.

6. Method according to one of the preceding claims, wherein the one or more carbon-based solvents are selected from alcohols, esters of carboxylic acids, dimethyl sulfoxide, acetamide, formamide, acetonitrile, aromatic solvents and heteroaromatic solvents.

7. Method according to the preceding claim, wherein the one or more carbon-based solvents are selected from toluene and pyridine.
